# EUROPEAN PATENT SPECIFICATION

(11) **EP 4 349 570 B1**
(45) Date of publication and mention of the grant of the patent: **03.12.2025**
(21) Application number: 22199403.1
(22) Date of filing: 03.10.2022
(51) Int. Cl.: B29C 64/205, B29C 64/147, B33Y 10/00, B33Y 30/00

(54) **METHOD FOR PRODUCING A 3D-PRINTED OBJECT MADE OF CELLULOSIC MATERIAL**
VERFAHREN ZUR HERSTELLUNG EINES 3D-GEDRUCKTEN GEGENSTANDS AUS CELLULOSEMATERIAL
PROCÉDÉ DE FABRICATION D'UN OBJET IMPRIMÉ EN 3D EN MATIÈRE CELLULOSIQUE

(43) Date of publication of application: 10.04.2024
(73) Proprietor: Technische Universität Graz, 8010 Graz (AT)
(72) Inventor: de Traglia Amancio Filho, Sergio, 8010 Graz (AT); Effertz, Pedro, 8010 Graz (AT); Sommitsch, Christof, 8010 Graz (AT)
(74) Representative: Patentanwaltskanzlei Matschnig & Forsthuber OG

(56) References cited:
- WO-A1-2018/092018
- US-A1- 2022 042 246
- US-B1- 6 519 500
- EBERS LISA-SOPHIE: "(PDF) 3D printing of lignin: Challenges, opportunities and roads onward", 31 May 2021 (2021-05-31), pages 1 - 16, XP093027446, Retrieved from the Internet <URL:https://www.researchgate.net/publication/351498940_3D_printing_of_lignin_Challenges_opportunities_and_roads_onward> [retrieved on 20230228]

## Description

### Field of the invention and description of prior art

The present invention relates to a method for producing a 3D-printed object made of cellulosic material.

Techniques that allow production of objects made of cellulosic material are known from prior art. For instance, fused filament fabrication (FFF) allows implementing a 3D printing process that uses a continuous filament of PLA with wood fibre. The filament can be fed from a large spool through a moving, heated printer extruder head, and is deposited on the growing work. The print head is moved under computer control to define the printed shape. Usually the head moves in two dimensions to deposit one horizontal plane, or layer, at a time; the work or the print head is then moved vertically by a small amount to begin a new layer. However, the part quality associated to FFF is poor. The mechanical, physical and chemical properties have less resemblance with natural wood, as wood fibres and polymeric resin are mixed to create a synthetic composite rather than actual wood. The PLA-wood filament is very abrasive causing severe wear on the extrusion nozzle.

Another technique is known from the company "Forust". Therein, a 3D printing process uses a composite of wood particles (recycled sawdust) encased in a bio-epoxy resin. This process follows a similar principle to Binder Jetting 3D printing. The mechanical properties are comparably weak as wood particles are used instead of fibres. Energy consumption associated to the epoxy resin production and poor recyclability (the used resin is a thermoset polymer; therefore it cannot be re-molten) at the end of the product life-cycle is yet another drawback of this technology. US 6519500 B1 discloses a method of fabricating an object through ultrasonic consolidation of plastic or metallic materials.

US 2022/042246 A1 concerns a wet laid nonwoven comprising cellulose and cellulose ester fibers; wherein said wet laid nonwoven is bonded to itself, another substrate, or another wet laid nonwoven material; and wherein said bonding is accomplished at least in part by ultrasonic welding.

The disclosure "(PDF) 3D printing of lignin: Challenges, opportunities and roads onward", 31 May 2021 (2021-05-31), pages 1-16, XP93027446 (Retrieved from the Internet:URL:https://www.researchgate.net/ publication/351498940_3D_printing_of_lignin_Challenges_opportunities_and_roads_onward) discusses various 3D printing methods with material comprising lignin.

### Summary of the invention

It is an object of the present invention to provide a method that overcomes the drawbacks of the prior art. This object is solved by method for producing a 3D-printed object made of cellulosic material according to the present invention by comprising the following steps:
a) providing data comprising a digital representation of the object to be produced, said object having a total height, b) setting a layer thickness of depositing cellulosic (substrate) material containing lignin, wherein the layer thickness is equal to or less than half the size of the total height, c) obtaining a layered digital representation of the object to be produced, including computer-assisted subdivision of the total height of the object to be produced into a number N (N ≥ 2 to n, whereas n is a natural number) height layers by dividing the total height with the layer thickness of the depositing cellulosic material, wherein each of the N height layers corresponds to an respective partial structure of the object to be produced, wherein the number N is an integer greater than or equal to the number 2, d) feeding the layered digital representation according to step c) to an ultrasonic welding machine (for instance BRANSON L20 Ultrasonic welding machine) having a sonotrode and providing said machine with the depositing cellulosic material, e) producing the object by generating the lowest layer of the height layers, also referred to as base layer, and sequentially generating and stacking the other height layers, also referred to as stacked height layers, onto the respectively previous layers until the number of N height layers is reached, wherein in step e) each height layer is made of the depositing cellulosic material of step d) and wherein each stacked height layer is fixed onto the respectively previous layer by moving the sonotrode along the surface of said stacked height layer in order to transfer frictional energy through said stacked height layer towards a contacting surface of the respective previous height layer causing re-setting and connection of the lignin along the contacting surface.

The term "frictional energy" can be described as mechanical energy that is turned into heat by way of friction. The lowest layer can also be a pre-existing layer that was not initially designed for the purpose of 3D printing. For instance, when repairing parts made of wood such parts can serve as lowest layer and additional layers can be added by way of the method according to the invention.

Regarding the depositing cellulosic material, a lignin content between 15 to 40% of dry weight can provide good results when using such depositing material in the present invention.

The present invention provides with enhanced design freedom. It offers an enhanced ability to produce highly complex geometries at a fraction of the time and with no traditional craftsmanship skills required in conventional wood crafting. Moreover, the invention allows to reduce the amount of waste material that results from production when compared to conventional bulk milling and lathing. The ability to do cellulosic material (e.g. wood, paper) prototyping and structural/functional parts with infinite geometric design freedom at the press of a button (from the CAD model up to the printed part) is astonishing. The mechanical, physical and chemical properties of the cellulosic materials remains nearly unchanged throughout the printing process, enabling the production of high resisting, structural components (a first in cellulosic material printing).

Compared to FFF the wooden parts produced by the method according to the invention do have superior quality.

The present invention causes melting and flowing of amorphous, cell-connected wood material, mainly lignin. This results in partial detachment, the "loosening" of long wood cells, wood fibres and the formation of a fibre network immersed in a matrix of molten material which then solidifies. In this way, a composite material of wood cells and fibres with a molten lignin polymer matrix is formed. Chemical cross-linking reactions of lignin with carbohydrate-derived furfural also takes place.

Preferably, the frequency of the sonotrode ranges between 10 kHz to 25 kHz, in particular between 15 kHz and 20 kHz.

Advantageously, the sonotrode vibrates with an amplitude of up to 5 to 100 um, in particular 10 to 50 um.

Preferably, the sonotrode has a flat tip having a rectangular shape for contacting the surfaces of the height layers, wherein the width and the length of the flat tip ranges between 0,5cm and 2cm and wherein during the fixing process of step e) the sonotrode is pushed with a force ranging between 100N and 500N onto the contacting surface of the respective previous height layer.

The longitudinal movement speed of the sonotrode (i.e. along the surface without considering the vibration of the sonotrode) can range for instance between 10 - 30 m/min.

Advantageously, all the height layers are arranged parallel to each other.

Preferably, any of the preceding claims, wherein the depositing cellulosic material is made of paper, card board, plaques of thermoplastic polymers reinforced with wood flour, fiber, or chips or wood, in particular ply wood.

Basically, various types of wood or related sources proved suitable to be used in the present invention. So far every type of wood worked well. Just minor adjustments of the process parameters can be useful. For instance, when the material burns the ultrasonic frequency and/or tool pressure applied can be reduced.

Advantageously, the layer thickness of the cellulosic layer material is equal to or greater than 0,5mm.

Preferably, the depositing layer is pre-cut and prepared to receive the stacked height layers.

Advantageously, the stacked height layers are provided in step e) by way of a tape spool comprising a tape of depositing cellulosic material, wherein the each stacked layer is created by unspooling tape of the tape spool and fixing the tape onto the surface of the height layer below, wherein each stacked layer comprises a plurality of tracks of tape adjacent to each other. Preferably, the with of the tape ranges between 5mm and 20mm. The tape has a rectangular cross-section.

Alternatively, the stacked height layers are provided in step e) by way of single pieced sheets of cellulosic material.

Advantageously, all the height layers are cut by laser cutting applied before and/or after step e).

Preferably, the ultrasonic movement of the sonotrode during the fixation of a stacked height layer according to step e) is a perpendicular, parallel or torsional motion with regard to the contacting surface of the respective previous height layer. The kind of motion will be chosen depending on the kind of surface and the geometrical details of the surface.

Advantageously, after step e) the outer surface of the object is refined by way of mechanical treatment, in particular by way of drilling and/or milling.

Preferably, the number of N height layers is determined by rounding up the result of the division according to step c) to the next single digit number.

Furthermore, the invention relates to an object produced by a method according to the invention.

### Brief description of the drawings

In the following, in order to further demonstrate the present invention, illustrative and non-restrictive embodiments are discussed, as shown in the drawings, which show:
- Fig. 1: an exemplary object to be produced,
- Fig. 2: a depositing layer of cellulosic material,
- Fig. 3: a layered digital representation 1" of the object 1 to be produced,
- Fig. 4: an exemplary object produced by the present invention,
- Fig. 5a: a schematic explaining the process of friction welding by way of an example using a sheet as a depositing material under horizontal vibration,
- Fig. 5b: a schematic explaining the process of friction welding in another position following the position of Fig. 5a,
- Fig. 6: a schematic explaining the process of friction welding by way of an example using a tape as a depositing layer material,
- Fig. 7: a schematic flow diagram of different stages of the method according to the present invention,
- Fig. 8: yet another flow diagram of different stages of the method of the present invention.

### Detailed description of embodiments of the invention

In the following figures identical reference signs refer to identical features unless expressly depicted otherwise. The reference signs are only for informational purpose and do not delimit the scope of protection.

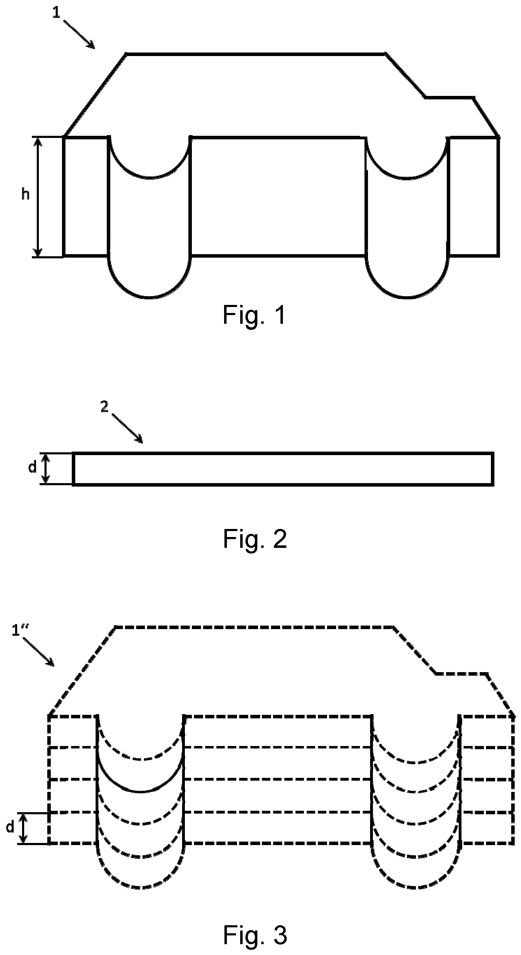

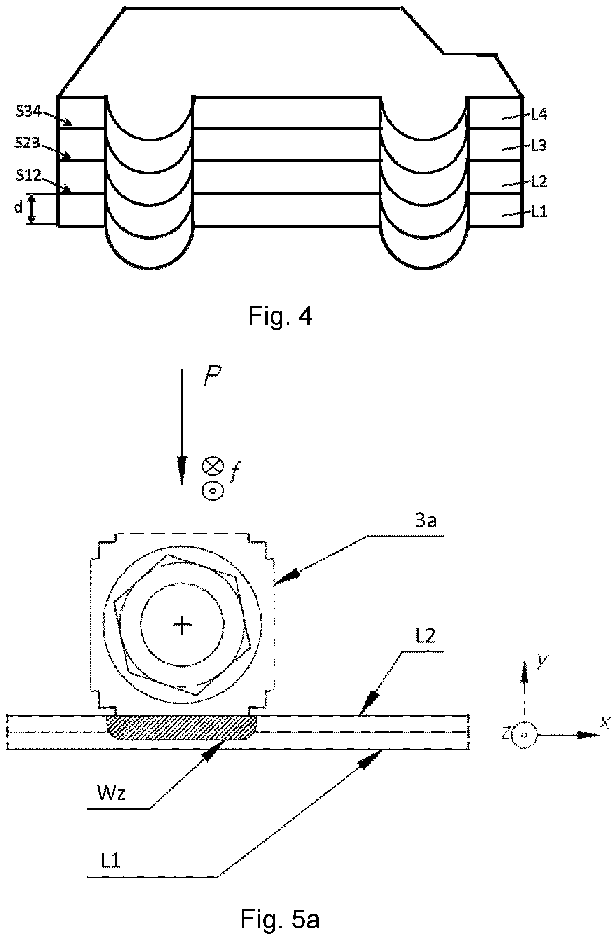

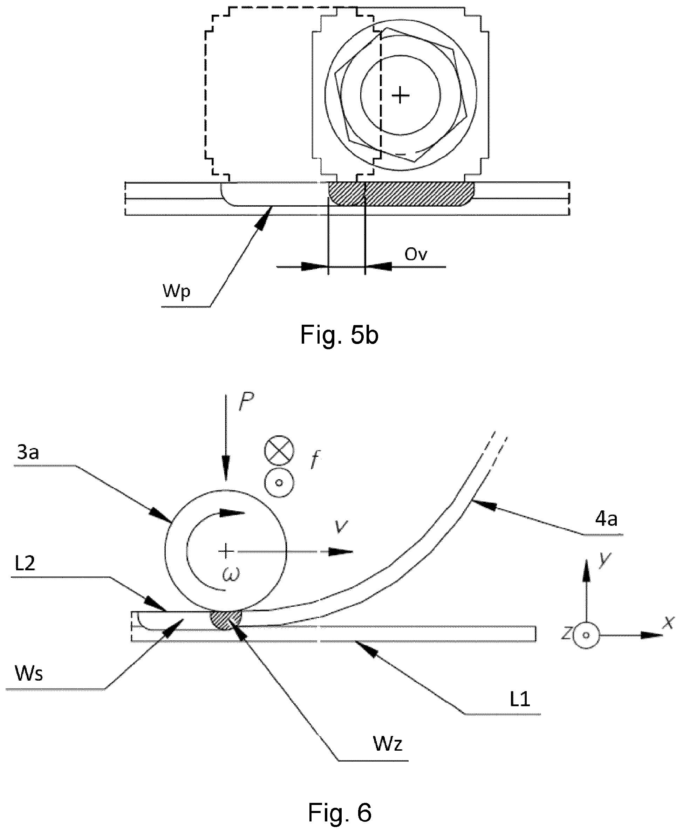

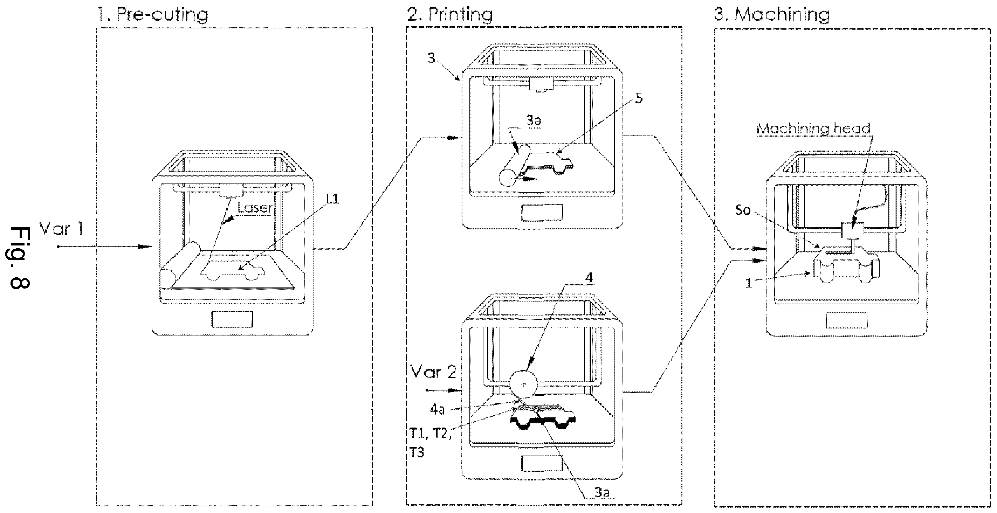

Fig. 1 shows an exemplary object to be produced, once being produced being referred to as object 1. This object has a height h and certain shape. Fig. 2 shows an exemplary layer of cellulosic material 2. Such a layer can either be provided as a single sheet 5 (see Fig. 5a and Var I in Fig 8) of by applying a tape 4a (see Fig. 6 and Var II in Fig. 8).

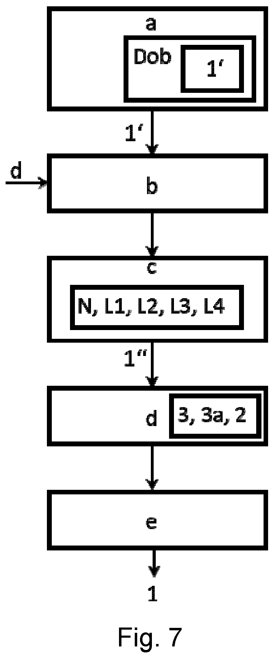

Fig. 7 shows a schematic flow diagram of different stages of the method according to the present invention. The present invention relates to a method for producing a 3D-printed object 1 made of cellulosic material, comprising the following steps:
a) providing data Dob comprising a digital representation 1' of the object 1 to be produced, said object 1 having a total height h,
b) setting a layer thickness d of cellulosic depositing material 2 containing lignin, wherein the layer thickness d is equal to or less than half the size of the total height h,
c) obtaining a layered digital representation 1" (see also Fig. 3) of the object 1 to be produced, including computer-assisted subdivision of the total height h of the object 1 to be produced into a number N of height layers L1, L2, L3, L4 (see Fig. 4) by dividing the total height h with the layer thickness d of the depositing cellulosic material 2, wherein each of the N height layers L1, L2, L3, L4 corresponds to an respective partial structure of the object 1 to be produced, wherein the number N is an integer greater than or equal to the number 2,
d) feeding the layered digital representation 1" according to step c to an ultrasonic welding machine 3 having a sonotrode 3a and providing said machine 3 with the depositing cellulosic material 2,
e) producing the object 1 by generating the lowest layer of the height layers L1, L2, L3, L4, also referred to as base layer L1, and sequentially generating and stacking the other height layers L2, L3, L4, also referred to as stacked height layers L2, L3, L4, onto the respectively previous layers until the number of N height layers L1, L2, L3, L4 is reached,
wherein in step e) each height layer L1, L2, L3, L4 is made of the depositing cellulosic material 2 of step d) and wherein each stacked height layer L2, L3, L4 is fixed onto the respectively previous layer by moving the sonotrode 3a along the surface of said stacked height layer L2, L3, L4 in order to transfer frictional energy through said stacked height layer L2, L3, L4 towards a contacting surface S12, S23, S34 (see Fig. 4) of the respective previous height layer L1, L2, L3 causing re-setting and connection of the lignin along the contacting surface S12, S23, S34.

As can be seen in Fig. 4, preferably all the height layers L1, L2, L3, L4 are arranged parallel to each other. Advantageously, the depositing cellulosic material 2 is made of paper, card board, or wood, in particular ply wood. The layer thickness d of the depositing cellulosic material 2 between equal to or greater than 0,5mm. The base layer L1 can be pre-cut and prepared to receive the stacked height layers L2, L3, L4.

Fig. 5a shows a schematic explaining the process of friction welding by way of an example using single pieced sheets 5 (see also Var I of Fig. 8) as a depositing material 2. To be more precise, the stacked height layers L2, L3, L4 are provided in step e) by way of single pieced sheets 5 of cellulosic material. The stacked height layer L2 is pre-cut and positioned above the lower layer L1. A rectangular sonotrode 3a comes into contact with the surface of the upper layer, exerting pressure P against the y direction. Pressure is held, and an oscillating motion is initiated with ultrasonic frequency f in the z direction. As a result, frictional heat (also referred to as frictional energy) softens and re-sets lignin, promoting mechanical interlocking of the cellular material, causing the "welding" of the 2 layers L1 and L2 in a predefined area, namely the weld zone Wz. Afterwards, the sonotrode is repositioned in a translational movement along x to increase the contact between upper L2 and lower layer L1. Fig. 5b shows a schematic explaining the process of friction welding in another position following the position of Fig. 5a. The welding process is repeated, while an overlap Ov (for instance having a length between 5% and 20% of the width of the sonotrode 3a) with the established welding zone is maintained. The whole contact area between the layers L1 and L2 can be welded by way of said method.

All the height layers L1, L2, L3, L4 can be cut by laser cutting applied before and/or after step e).

Preferably, the ultrasonic movement of the sonotrode 3a during the fixation of a stacked height layer L2, L3, L4 according to step e) is a perpendicular, parallel or torsional motion with regard to the contacting surface S12, S23, S34 of the respective previous height layer L1, L2, L3. The kind of motion can be chosen depending on the kind of surface and the geometrical details of the surface. The frequency f of the sonotrode 3a can range between 10 kHz to 25 kHz, in particular between 15 kHz and 20 kHz. Preferably, the sonotrode 3a vibrates with an amplitude of up to 5 to 100 um, in particular 10 to 50 um.

In this example, the sonotrode 3a has a flat tip having a rectangular shape for contacting the surfaces of the height layers, wherein the width and the length of the flat tip ranges between 0,5cm and 2cm and wherein during the fixing process of step e the sonotrode 3a is pushed with a force ranging between 100N and 500N onto the contacting surface S12, S23, S34 of the respective previous height layer L1, L2, L3, resulting in a pressure P. Typical pressure ranges hence can range for instance between 50N/cm² and 500N/cm².

Fig. 6 shows a schematic explaining the process of ultrasonic welding using parallel sonotrode motion to produce continues deposition by way of an example using a tape 4a as a depositing material 2. The stacked height layers L2, L3, L4 can be provided in step e) by way of a tape spool 4 (see Fig. 8, Var 2) comprising a tape 4a of cellulosic material 2, wherein the each stacked layer L2, L3, L4 is created by unspooling tape 4a of the tape spool 4 and fixing the tape 4a onto the surface S12, S23, S34 of the height layer L1, L2, L3 below, wherein each stacked layer L2, L3, L4 comprises a plurality of tracks T1, T2, T3 of tape 4a adjacent to each other. In this case, the sonotrode 3a can have a cylindrical shape, allowing unspooling of the tape 4a and moving with a movement speed v of about 10m/min to 30m/min in the direction of the axis x to create a track T1, T2, T3 (see Fig. 8, Var 2). The width of the tracks corresponds with the width of the tape 4a. Neighbouring tracks are adjacent to another leaving no free space in between, hence creating an even layer unless required otherwise by the model 1". Also, the sonotrode 3a can rotate around its longitudinal axis enhancing unspooling of the tape.

The spooled cellulosic material in the form of tape 4a is laid onto the previous layer L1. A cylindrical sonotrode 3a comes into contact with the surface of the upper layer L2, exerting pressure P against the y direction. Pressure is held, an oscillating and rotational motion is initiated with ultrasonic frequency f in the z direction and angular velocity w, respectively. The rotational movement as a result of the multiplication of radius and angular velocity w ranges between 10mm/s and 20mm/s. As a result of 2. and 3., frictional heat softens and resets lignin, promoting mechanical interlocking of the cellular material, causing the "welding" of the 2 layers. The frictional energy is carried out along the tape 4a in the x direction as the sonotrode 3a rotates over the tape 4a creating a weld zone Wz and leaving behind a weld seam Ws until the desired length is reached. A cutting tool separates the welded tape 4a from the spool 4. The sonotrode 3a is repositioned in the y direction adjacent to the previous tape track, and said steps can be repeated until the geometrical requirements of the given layer are completed.

Taking a closer look on Fig. 8, it can be seen that after step e) the outer surface So of the object 1 can be refined by way of mechanical treatment, in particular by way of drilling and/or milling using a machining head.

Preferably, the number of N height layers L1, L2, L3, L4 is determined by rounding up the result of the division according to step c to the next single digit number.

Moreover, the invention also relates to an object 1 produced by a method according to the invention.

## Claims

1. Method for producing a 3D-printed object (1) made of cellulosic material, comprising the following steps:
a) providing data (Dob) comprising a digital representation (1') of the object (1) to be produced, said object (1) having a total height (h),
b) setting a layer thickness (d) of depositing cellulosic material (2) containing lignin, wherein the layer thickness (d) is equal to or less than half the size of the total height (h),
c) obtaining a layered digital representation (1") of the object (1) to be produced, including computer-assisted subdivision of the total height (h) of the object (1) to be produced into a number N of height layers (L1, L2, L3, L4) by dividing the total height (h) with the layer thickness (d) of the cellulosic substrate material (2), wherein each of the N height layers (L1, L2, L3, L4) corresponds to an respective partial structure of the object (1) to be produced, wherein the number N is an integer greater than or equal to the number 2,
d) feeding the layered digital representation (1") according to step c) to an ultrasonic welding machine (3) having a sonotrode (3a) and providing said machine (3) with the depositing cellulosic material (2),
e) producing the object (1) by generating the lowest layer of the height layers (L1, L2, L3, L4), also referred to as base layer (L1), and sequentially generating and stacking the other height layers (L2, L3, L4), also referred to as stacked height layers (L2, L3, L4), onto the respectively previous layers until the number of N height layers (L1, L2, L3, L4) is reached,
wherein in step e) each height layer (L1, L2, L3, L4) is made of the depositing cellulosic material (2) of step d) and wherein each stacked height layer (L2, L3, L4) is fixed onto the respectively previous layer by moving the sonotrode (3a) along the surface of said stacked height layer (L2, L3, L4) in order to transfer frictional energy through said stacked height layer (L2, L3, L4) towards a contacting surface (S12, S23, S34) of the respective previous height layer (L1, L2, L3) causing re-setting and connection of the lignin along the contacting surface (S12, S23, S34).

2. Method according to claim 1, wherein the frequency of the sonotrode (3a) ranges between 10 kHz to 25 kHz, in particular between 15 kHz and 20 kHz.

3. Method according to any of the preceding claims, wherein the sonotrode (3a) vibrates with an amplitude of up to 5 to 100 um, in particular 10 to 50 um.

4. Method according to any of the preceding claims, wherein the sonotrode (3a) has a flat tip having a rectangular shape for contacting the surfaces of the height layers (L1, L2, L3, L4), wherein the width and the length of the flat tip ranges between 0,5cm and 2cm and wherein during the fixing process of step e) the sonotrode (3a) is pushed with a force ranging between 100N and 500N onto the contacting surface (S12, S23, S34) of the respective previous height layer (L1, L2, L3).

5. Method according to any of the preceding claims, wherein all the height layers (L1, L2, L3, L4) are arranged parallel to each other.

6. Method according to any of the preceding claims, wherein the depositing cellulosic material (2) is made of paper, card board, plaques of thermoplastic polymers reinforced with wood flour, fiber, or chips or wood, in particular ply wood.

7. Method according to any of the preceding claims, wherein the layer thickness (d) of the depositing cellulosic material (2) is equal to or greater than 0,5mm.

8. Method according to any of the preceding claims, wherein the base layer (L1) is pre-cut and prepared to receive the stacked height layers (L2, L3, L4).

9. Method according to any of the preceding claims, wherein the stacked height layers (L2, L3, L4) are provided in step e) by way of a tape spool (4) comprising a tape (4a) of depositing cellulosic material (2), wherein the each stacked layer (L2, L3, L4) is created by unspooling tape (4a) of the tape spool (4) and fixing the tape (4a) onto the surface (S12, S23, S34) of the height layer (L1, L2, L3) below, wherein each stacked layer (L2, L3, L4) comprises a plurality of tracks (T1, T2, T3) of tape (4a) adjacent to each other.

10. Method according to any of the claims 1 to 8, wherein the stacked height layers (L2, L3, L4) are provided in step e) by way of single pieced sheets (5) of cellulosic material.

11. Method according to any of the preceding claims, wherein all the height layers (L1, L2, L3, L4) are cut by laser cutting applied before and/or after step e).

12. Method according to any of the preceding claims, wherein the ultrasonic movement of the sonotrode (3a) during the fixation of a stacked height layer (L2, L3, L4) according to step e) is a perpendicular, parallel or torsional motion with regard to the contacting surface (S12, S23, S34) of the respective previous height layer (L1, L2, L3).

13. Method according to any of the preceding claims, wherein after step e) the outer surface (So) of the object (1) is refined by way of mechanical treatment, in particular by way of drilling and/or milling.

14. Method according to any of the preceding claims, wherein the number of N height layers (L1, L2, L3, L4) is determined by rounding up the result of the division according to step c) to the next single digit number.

15. Object (1) produced by a method according to any of the preceding claims.

## Patentansprüche

1. Verfahren zur Herstellung eines 3D-gedruckten Objekts (1) aus zellulosehaltigem Material, das die folgenden Schritte umfasst:
a) Bereitstellung von Daten (Dob), die eine digitale Darstellung (1') des herzustellenden Objekts (1) umfassen, wobei das Objekt (1) eine Gesamthöhe (h) aufweist,
b) Festlegen einer Schichtdicke (d) der Ablagerung von ligninhaltigem Zellulosematerial (2), wobei die Schichtdicke (d) gleich oder kleiner als die halbe Größe der Gesamthöhe (h) ist,
c) Erhalten einer schichtweisen digitalen Darstellung (1") des herzustellenden Objekts (1), einschließlich computergestützter Unterteilung der Gesamthöhe (h) des herzustellenden Objekts (1) in eine Anzahl N von Höhenschichten (L1, L2, L3, L4) durch Division der Gesamthöhe (h) durch die Schichtdicke (d) des zellulosehaltigen Trägermaterials (2), wobei jede der N Höhenschichten (L1, L2, L3, L4) jeweils einer Teilstruktur des herzustellenden Objekts (1) entspricht, wobei die Zahl N eine ganze Zahl größer oder gleich der Zahl 2 ist,
d) Zuführen der geschichteten digitalen Darstellung (1") gemäß Schritt c) zu einer Ultraschall-Schweißmaschine (3) mit einer Sonotrode (3a) und Versorgen dieser Maschine (3) mit dem aufzutragenden Zellulosematerial (2),
e) Herstellen des Objekts (1) durch Erzeugen der untersten Schicht der Höhenschichten (L1, L2, L3, L4), auch als Basisschicht (L1) bezeichnet, und aufeinanderfolgendes Erzeugen und Aufstapeln der weiteren Höhenschichten (L2, L3, L4), auch als gestapelte Höhenschichten (L2, L3, L4) bezeichnet, auf die jeweils vorhergehenden Schichten, bis die Anzahl von N Höhenschichten (L1, L2, L3, L4) erreicht ist,
wobei in Schritt e) jede Höhenschicht (L1, L2, L3, L4) aus dem sich ablagernden Zellulosematerial (2) von Schritt d) hergestellt wird und wobei jede gestapelte Höhenschicht (L2, L3, L4) auf der jeweils vorhergehenden Schicht fixiert wird, indem die Sonotrode (3a) entlang der Oberfläche der gestapelten Höhenschicht (L2, L3, L4) bewegt wird, um Reibung zu übertragen, L4) fixiert wird, um Reibungsenergie durch die Schicht mit gestapelter Höhe (L2, L3, L4) zu einer Kontaktfläche (S12, S23, S34) der jeweiligen Schicht mit vorheriger Höhe (L1, L2, L3) zu übertragen, was eine Rückverfestigung und Verbindung des Lignins entlang der Kontaktfläche (S12, S23, S34) bewirkt.

2. Verfahren nach Anspruch 1, wobei die Frequenz der Sonotrode (3a) zwischen 10 kHz und 25 kHz, insbesondere zwischen 15 kHz und 20 kHz liegt.

3. Verfahren nach einem der vorhergehenden Ansprüche, wobei die Sonotrode (3a) mit einer Amplitude von bis zu 5 bis 100 um, insbesondere 10 bis 50 um, schwingt.

4. Verfahren nach einem der vorhergehenden Ansprüche, wobei die Sonotrode (3a) eine flache Spitze mit einer rechteckigen Form zum Kontaktieren der Oberflächen der Höhenschichten (L1, L2, L3, L4) aufweist, wobei die Breite und die Länge der flachen Spitze zwischen 0,5 cm und 2 cm liegt und wobei während des Fixiervorgangs von Schritt e) die Sonotrode (3a) mit einer Kraft zwischen 100 N und 500 N auf die Kontaktfläche (S12, S23, S34) der jeweils vorhergehenden Höhenschicht (L1, L2, L3) gedrückt wird.

5. Verfahren nach einem der vorhergehenden Ansprüche, wobei alle Höhenschichten (L1, L2, L3, L4) parallel zueinander angeordnet sind.

6. Verfahren nach einem der vorhergehenden Ansprüche, wobei das ablegende Zellulosematerial (2) aus Papier, Karton, mit Holzmehl, -fasern oder -spänen verstärkten Platten aus thermoplastischen Polymeren oder Holz, insbesondere Schichtholz, besteht.

7. Verfahren nach einem der vorangehenden Ansprüche, wobei die Schichtdicke (d) des abgesetzten Zellulosematerials (2) gleich oder größer als 0,5 mm ist.

8. Verfahren nach einem der vorhergehenden Ansprüche, wobei die Basisschicht (L1) vorgeschnitten und zur Aufnahme der gestapelten Höhenschichten (L2, L3, L4) vorbereitet wird.

9. Verfahren nach einem der vorhergehenden Ansprüche, wobei die gestapelten Höhenschichten (L2, L3, L4) in Schritt e) über eine Bandspule (4) mit einem Band (4a) zum Ablegen von Zellulosematerial (2) bereitgestellt werden, wobei die jeweilige gestapelte Schicht (L2, L3, L4) durch Abspulen des Bandes (4a) von der Bandspule (4) und Fixieren des Bandes (4a) auf der Oberfläche (S12, S23, S34) der darunter liegenden Höhenschicht (L1, L2, L3) erzeugt wird, wobei jede gestapelte Schicht (L2, L3, L4) eine Vielzahl von Spuren (T1, T2, T3) des Bandes (4a) nebeneinander umfasst.

10. Verfahren nach einem der Ansprüche 1 bis 8, wobei die gestapelten Höhenschichten (L2, L3, L4) in Schritt e) durch einzelne zusammengesetzte Blätter (5) aus Zellulosematerial bereitgestellt werden.

11. Verfahren nach einem der vorhergehenden Ansprüche, wobei alle Höhenschichten (L1, L2, L3, L4) durch Laserschneiden vor und/oder nach Schritt e) geschnitten werden.

12. Verfahren nach einem der vorhergehenden Ansprüche, wobei die Ultraschallbewegung der Sonotrode (3a) während der Fixierung einer gestapelten Höhenlage (L2, L3, L4) gemäß Schritt e) eine senkrechte, parallele oder torsionale Bewegung in Bezug auf die Kontaktfläche (S12, S23, S34) der jeweils vorhergehenden Höhenlage (L1, L2, L3) ist.

13. Verfahren nach einem der vorhergehenden Ansprüche, wobei nach Schritt e) die äußere Oberfläche (So) des Gegenstandes (1) durch eine mechanische Bearbeitung, insbesondere durch Bohren und/oder Fräsen, veredelt wird.

14. Verfahren nach einem der vorhergehenden Ansprüche, wobei die Anzahl der N Höhenschichten (L1, L2, L3, L4) durch Aufrunden des Ergebnisses der Division nach Schritt c) auf die nächste einstellige Zahl bestimmt wird.

15. Gegenstand (1), hergestellt nach einem Verfahren nach einem der vorhergehenden Ansprüche.

## Revendications

1. Procédé de production d'un objet imprimé en 3D (1) en matériau cellulosique, comprenant les étapes suivantes :
a) fournir des données (Dob) comprenant une représentation numérique (1') de l'objet (1) à produire, ledit objet (1) ayant une hauteur totale (h),
b) définir une épaisseur de couche (d) de dépôt de matériau cellulosique (2) contenant de la lignine, l'épaisseur de couche (d) étant égale ou inférieure à la moitié de la hauteur totale (h),
c) obtenir une représentation numérique en couches (1") de l'objet (1) à produire, y compris la subdivision assistée par ordinateur de la hauteur totale (h) de l'objet (1) à produire en un nombre N de couches de hauteur (L1, L2, L3, L4) en divisant la hauteur totale (h) de l'objet (1) à produire en un nombre N de couches de hauteur (L1, L2, L3, L4), L4) en divisant la hauteur totale (h) par l'épaisseur de la couche (d) du matériau de substrat cellulosique (2), chacune des N couches de hauteur (L1, L2, L3, L4) correspondant à une structure partielle respective de l'objet (1) à produire, le nombre N étant un nombre entier supérieur ou égal au nombre 2,
d) alimenter la représentation numérique en couches (1") selon l'étape c) à une machine de soudage par ultrasons (3) ayant une sonotrode (3a) et fournir à ladite machine (3) le matériau cellulosique de dépôt (2),
e) produire l'objet (1) en générant la couche la plus basse des couches de hauteur (L1, L2, L3, L4), également appelée couche de base (L1), et en générant et en empilant séquentiellement les autres couches de hauteur (L2, L3, L4), également appelées couches de hauteur empilées (L2, L3, L4), sur les couches précédentes respectives jusqu'à ce que le nombre de N couches de hauteur (L1, L2, L3, L4) est atteint,
dans lequel, à l'étape e), chaque couche de hauteur (L1, L2, L3, L4) est constituée du matériau cellulosique de dépôt (2) de l'étape d) et dans lequel chaque couche de hauteur empilée (L2, L3, L4) est fixée sur la couche précédente respective en déplaçant la sonotrode (3a) le long de la surface de ladite couche de hauteur empilée (L2, L3, L4) afin de transférer l'énergie de friction à travers ladite couche de hauteur empilée (L2, L3, L4) vers une surface de contact (S12, S23, S34) de la couche de hauteur précédente respective (L1, L2, L3), ce qui provoque le réajustement et la connexion de la lignine le long de la surface de contact (S12, S23, S34).

2. Procédé selon la revendication 1, dans laquelle la fréquence de la sonotrode (3a) est comprise entre 10 kHz et 25 kHz, en particulier entre 15 kHz et 20 kHz.

3. Procédé selon l'une quelconque des revendications précédentes, dans laquelle la sonotrode (3a) vibre avec une amplitude allant de 5 à 100 um, en particulier de 10 à 50 um.

4. Procédé selon l'une quelconque des revendications précédentes, dans lequel la sonotrode (3a) a une pointe plate de forme rectangulaire pour entrer en contact avec les surfaces des couches de hauteur (L1, L2, L3, L4), dans lequel la largeur et la longueur de la pointe plate sont comprises entre 0,5cm et 2cm et dans lequel, pendant le processus de fixation de l'étape e), la sonotrode (3a) est poussée avec une force comprise entre 100N et 500N sur la surface de contact (S12, S23, S34) de la couche de hauteur précédente respective (L1, L2, L3).

5. Procédé selon l'une quelconque des revendications précédentes, dans lequel toutes les couches de hauteur (L1, L2, L3, L4) sont disposées parallèlement les unes aux autres.

6. Procédé selon l'une quelconque des revendications précédentes, dans lequel le matériau cellulosique de dépôt (2) est constitué de papier, de carton, de plaques de polymères thermoplastiques renforcées par de la farine de bois, des fibres ou des copeaux de bois, en particulier de bois lamellaire.

7. Procédé selon l'une quelconque des revendications précédentes, dans lequel l'épaisseur de la couche (d) du matériau cellulosique de dépôt (2) est égale ou supérieure à 0,5 mm.

8. Procédé selon l'une quelconque des revendications précédentes, dans lequel la couche de base (L1) est prédécoupée et préparée pour recevoir les couches de hauteur empilées (L2, L3, L4).

9. Procédé selon l'une quelconque des revendications précédentes, dans lequel les couches de hauteur empilées (L2, L3, L4) sont fournies à l'étape e) au moyen d'une bobine de ruban (4) comprenant un ruban (4a) de dépôt de matériau cellulosique (2), dans lequel chaque couche empilée (L2, L3, L4) est créée en déroulant le ruban (4a) de la bobine de ruban (4) et en le fixant sur la surface (S12, S23, S34) de la couche de hauteur (2), L4) est créée en déroulant la bande (4a) de la bobine de bande (4) et en fixant la bande (4a) sur la surface (S12, S23, S34) de la couche de hauteur (L1, L2, L3) en dessous, où chaque couche empilée (L2, L3, L4) comprend une pluralité de pistes (T1, T2, T3) de la bande (4a) adjacentes les unes aux autres.

10. Procédé selon l'une quelconque des revendications 1 à 8, dans lequel les couches empilées (L2, L3, L4) sont fournies à l'étape e) au moyen de feuilles individuelles (5) de matériau cellulosique.

11. Procédé selon l'une quelconque des revendications précédentes, dans lequel toutes les couches de hauteur (L1, L2, L3, L4) sont découpées au laser avant et/ou après l'étape e).

12. Procédé selon l'une quelconque des revendications précédentes, dans lequel le mouvement ultrasonique de la sonotrode (3a) pendant la fixation d'une couche de hauteur empilée (L2, L3, L4) conformément à l'étape e) est un mouvement perpendiculaire, parallèle ou de torsion par rapport à la surface de contact (S12, S23, S34) de la couche de hauteur précédente respective (L1, L2, L3).

13. Procédé selon l'une quelconque des revendications précédentes, dans lequel, après l'étape e), la surface extérieure (So) de l'objet (1) est affinée au moyen d'un traitement mécanique, notamment par forage et/ou fraisage.

14. Procédé selon l'une quelconque des revendications précédentes, dans lequel le nombre de couches de hauteur N (L1, L2, L3, L4) est déterminé en arrondissant le résultat de la division selon l'étape c) au chiffre supérieur.

15. Objet (1) produit par un procédé selon l'une quelconque des revendications précédentes.
